# EUROPEAN PATENT SPECIFICATION

(11) **EP 3 615 884 B1**
(45) Date of publication and mention of the grant of the patent: **10.03.2021**
(21) Application number: 18723085.9
(22) Date of filing: 27.04.2018
(51) Int. Cl.: F42B 10/66, F42B 30/10, F42B 12/20, F42B 10/06, F42B 12/10, F42B 12/32

(54) **PROJECTILE WITH SELECTABLE ANGLE OF ATTACK**
GESCHOSS MIT WÄHLBAREM ANGRIFFSWINKEL
PROJECTILE À ANGLE D'ATTAQUE SÉLECTIONNABLE

(30) Priority: 28.04.2017 SE 1700079
(43) Date of publication of application: 04.03.2020
(73) Proprietor: Bae Systems Bofors AB, 691 80 Karlskoga (SE)
(72) Inventor: THUMAN, Christer, 691 47 Karlskoga (SE); PETTERSSON, Thomas, 691 32 Karlskoga (SE); LARSSON, Mats, 691 32 Karlskoga (SE)
(74) Representative: Heimdal, Pär
(86) International application number: PCT/SE2018/050440
(87) International publication number: WO 2018/199843

(56) References cited:
- DE-A1- 19 509 346
- GB-A- 2 002 885
- US-A- 5 123 612

## Description

### TECHNICAL FIELD

The present invention relates to a projectile with selectable angle of attack for increased impact on a target.

### BACKGROUND

Mortars are used for indirect fire against targets which very often are not visible from the gun position. Likewise, mortars are a suitable choice if a target is in some way protected/blocked from the sides, or for various reasons is not penetrable from the side, but is more accessible from above. For instance, targets within an enclosure/wall, sunken targets, etc., can be cited.

Mortars exist in a large number of designs and with different calibers, most common being mortars in the calibers 8 or 12 cm, which are manually handled by a crew. Mortars can also be mounted on a stand or vehicle. The projectile which is launched from a mortar, for instance a shell-action shell (mortar shell), hits its target from above with tip first substantially perpendicular to the target. Most mortar shells are naturally fragmenting and have an all-round strike capability, which means that, upon detonation, splinters are mainly thrown out sideways, which does not have any major effect on, for instance vehicle roofs, concealed or lying targets.

The strength of mortars lies in their simple construction, low price and low weight. The weak aspects are primarily short firing range and little effect of the individual shot.

The projectiles which are today designed to solve to some extent the problems which are described above are significantly more technically advanced, significantly more costly and are usually used for a different type of situation and target.

For instance, there are projectiles with forward-directed ball plates, which eject balls/projectiles in the direction of travel of the shell, i.e. down toward the ground.

A further example is fin-stabilized artillery shells. They have control surfaces and fins and are guided with GPS technology, which makes them extremely accurate.

The shell is usually discharged with a howitzer and flies very high, maximally to about 15,000 meters, and at this height the wings are then deployed and the shell begins to glide toward the target. In the last bit, the shell falls almost vertically, which in this case optimizes the effect. In the case of long firing ranges, the maneuverability (diving capability) is, however, limited, which means that the angle of the shell upon detonation is not optimal.

In summary, there is a need for a method for being able to choose and control an angle of attack of a projectile in order to increase the effect. There is also a need for less costly projectiles, for instance mortar shells, with better impact on targets which are poorly accessible with balls/splinters having an all-round strike capability.

### SUMMARY OF THE INVENTION

An object of the present invention is to provide a projectile having increased impact on semi-hard targets compared with the projectiles which are used today and for example described in US 5 123 612 A.

The object is achieved by providing a projectile as defined in independent, claim 1, and a method for choosing the angle of attack of such a projectile as defined in independent claim 9. Favourable embodiments of the invention are further specified in the dependent claims.

Brief description of drawings

The invention will now be described, by way of example, with reference to the appended drawings, in which:
fig. 1 shows schematically a longitudinal section of a projectile.
fig. 2 shows a schematic sequence of the tilting of a projectile during the final phase of the projectile.
fig. 3a-c show different examples of how the projectile (B) relates to various target situations compared with the prior art (A).

### DETAILED DESCRIPTION OF EMBODIMENTS

Before the invention is disclosed and described in detail, it should be understood that this invention is not limited to specific materials or configurations described herein, but rather configurations and materials can vary. It should also be understood that the terminology applied herein is used only to describe specific embodiments and is not intended to be limiting, but rather the scope of the present invention is limited only by the appended claims.

In the present description, the term projectile relates to an object which is fired from a weapon or launched with a weapon. A shell is a projectile which contains an explosive charge or other type of active part.

In the present description, the term projectile is used to illustrate a projectile with the aim of hitting a target from above. The angle can be oblique.

The targets are described as being semi-hard, but the method is applicable also to other targets.

The targets for medium-caliber ammunition are described as being all types of armored targets apart from tank fronts, i.e. targets with armor protection equivalent to from about 10 to 200 mm armor steel. These projectiles are subcaliber and fin-stabilized, having a penetrator made of heavy metal or depleted uranium, which are fired at velocities between 1,200 and 1,600 m/s. The notation for this type of projectile is APFSDS ("Armor Piercing, Fin Stabilised, Discarding Sabot"). Large-caliber projectiles are mainly intended for combat against a tank front.

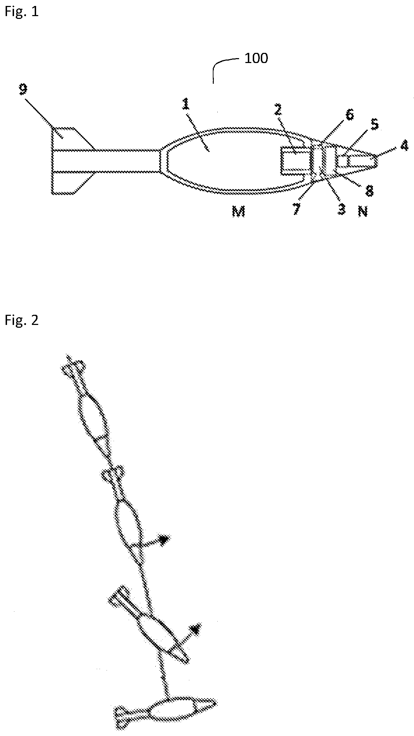

Fig. 1 shows a schematic longitudinal section of a projectile. The projectile 100 comprises an active charge 1 with an associated initiation device 2, and at least one impulse motor 3 with an associated initiation device 6. Said at least one impulse motor 3 of the projectile is disposed on that side of the projectile which is adjacent to the front of the projectile.

Said at least one side-acting impulse motor 3 can be driven, for instance, by a powder charge.

The projectile also comprises a height sensor 4, together with at least one gyro device 5.

The projectile comprises a first initiation device 6 for activating said at least one impulse motor 3.

The impulse motor 3 and the first initiation device 6 can be initiated via the height sensor 4.

The impulse motor 3 can in one embodiment be initiated via a GPS unit.

The impulse motor 3 can be pyrotechnical.

The first initiation device 6 is in one embodiment remote controlled via a GPS unit.

The second initiation device 2 is in one embodiment remote controlled via a GPS unit.

The active charge 1 can be configured with a non-circular cross section with the aim of achieving best possible splinter ejection angles once the projectile has been rotated through 90 degrees in relation to the path tangent. The active charge 1 can be configured as a projectile-forming, directional explosive action.

The active charge 1 can also comprise two smaller, oppositely directed active charges disposed behind the outer surface.

The active charge 1 can also be prefragmented with balls, cubes, hexagons or disks made of heavy metal or steel.

A method for tilting the projectile 100 over a desired target, for instance the ground, is illustrated in fig. 2. The method comprises the first angle signal of a gyro 5 being set to 0° at a predetermined distance to the target, and a second angle signal being set to the desired change of angle over the target. The distance to the target is measured, for instance, with a height sensor 4, and at a defined height the impulse motor 3 is started and the shell is rotated in relation to its path. The active charge 1 is initiated when the gyro 5 signals the second, predetermined angle, whereupon the outer surface of the projectile is exposed to the target.

In a first action mode, the projectile is tilted, for instance, to about 90° relative to its trajectory, preferably, with the aid of one or more side-acting impulse motor(s) disposed on that side of the projectile which is adjacent to the nose of the projectile. The simplest embodiment of the current projectile does not have equipment to identify/analyze targets, since this involves an increased cost. In another embodiment, sensors can be used during the final phase for identification of the target object and/or for distance measurement. Preferably, a height sensor is used for the distance measurement between the shell and the target. At a suitable distance from the target, one or more side-acting impulse motor(s) is/are initiated. A impulse motor, preferably a solid-propellant motor which produces sufficient force for rotation of the projectile through about 90 degrees relative to the trajectory, is chosen. For 120 mm mortar shells, the impulse should lie within the range 20-150 Ns.

Examples of solid propellant are nitrocellulose-based (one, two, triple or multibased) or composite powders. Following an executed tilt, an active charge in the projectile is initiated via an activation device and an initiation device. The initiation device is, preferably, pyrotechnical and of known type and is not described in closer detail in the continued text.

In order to compensate for uncertainties in the angle of rotation of the projectile/shell, for example due to cold or warm impulse motor, one or more gyro devices, preferably, is/are used. The function of the gyro is to measure the change of angle of the shell after the impulse motor has been started. Before the impulse motor is started, the angle signal of the gyro is set to 0 degrees. The impulse motor is started, and when the gyro reports 90 degrees the initiation of the active charge takes place. The angle varies, however, and an angle between 60-120 degrees is quite likely achieved. An angle between 70-110 or 80-100 degrees is more advantageous and an angle of around 90 degrees is the ideal scenario. Once the balls and splinters of the shell have a certain dispersion, an effect is not lacking if the angle deviates somewhat from 90 degrees.

Because it is known about which axis, fixed to the body, the rotation of the projectile occurs, a single-axis gyro for the above projectile should suffice. In the basic design of the projectile, it is unknown, however, in which direction the nozzle of the impulse motor is pointing in the tilting, but if a 90-degree maneuver is made this is immaterial.

The projectile has the same side toward the target as that on which the nozzle belonging to the impulse motor is seated. This means that it is sufficient to place balls on one side of the casing, i.e. on the same side as that on which the nozzle is seated. A drawback with this can be that if, in a second action mode, it is intended to fight a detachment, it might be wished not to tilt the shell at all, but instead to activate the scything action of the projectile.

In one embodiment, a curved ball cup can on one (exposed) side be utilized to optimize the ball dispersion.

Furthermore, it can be the case that, in combat against a detachment, it might be possible to make do with natural fragmentation, i.e. it does not very much matter that there are balls only on one side of the shell.

In a further action design (dual purpose), there are arranged small balls on one side and large balls on the other side.

In summary, the current invention results in an increased impact on a target and a reduced risk area, since no balls are thrown upward.

The proposed principle of tilting a projectile or shell is also applicable to a flying bomb or to a fin-stabilized shell for use against aerial targets or against surface targets on land and at sea. For these, a plurality of impulse motors are usually required in order to be able to initiate an impulse on the correct side of the projectile in order to adjust it in the correct direction in relation to the target. The multi-axis gyro keeps track of the position of the projectile, so that an impulse is initiated on the correct side in order to adjust the selectable angle.

One example is guided, fin-stabilized artillery shells. They have control surfaces and fins and are guided with GPS technology, which makes them extremely accurate. The shell is usually discharged with a howitzer and flies very high, maximally to about 15,000 meters, and at this height the wings are then deployed and the shell begins to glide toward the target. In the last bit, the shell falls almost vertically, which in this case optimizes the impact on certain target types which are vulnerable to scything splinter effect, unlike the version described for mortar shells, in which the shell is instead rotated in order to optimize the impact on targets which are vulnerable to downwardly directed splinters.

In those cases in which the maneuverability of a guided shell is not sufficient to attain a vertical detonation position at the end of the path, the effect can be improved if the shell has the capacity to right itself or be set at any chosen angle in relation to the target. The angular adjustment would then be less than for mortar shells, since a smaller angular adjustment is required in order to set the shell vertical.

Shells having high precision but poor maneuverability would obtain a significantly better effect with the current invention by attaining, with impulse motors, a desired detonation position.

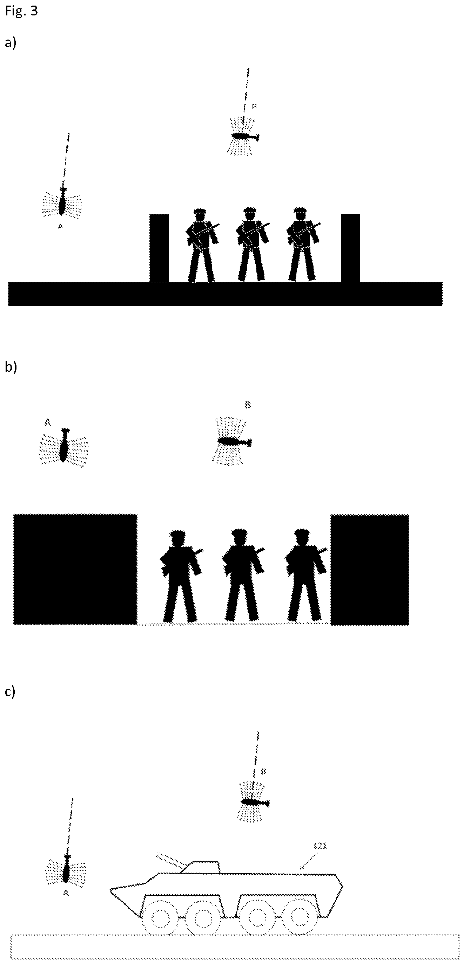

Fig. 3 a-c illustrate different possible methods showing how the invention B solves the problem of insufficient splinter effect for modern-day projectiles A in combat against a target with side protection by tilting the shell during its final phase, so that splinters are directed downward toward the target (see the direction of the arrows from the shell B).

Fig. 3a illustrates a situation where a detachment is protected by side walls, for example. Fig. 3b shows a similar situation, but in which the target is located in a basin, for example a bunker. Fig. 3c shows how the tilted shell B effectively directs its action toward a vehicle from above. The roof 121 often consists of thinner material than the sides of the vehicle and is therefore a suitable target. In all the figures it is shown how the splinter pattern differs between shell A and B in the different situations, in which B has impact on the target in the vertical direction, while A has its impact on the target in the horizontal direction. The splinter pattern is illustrated by the arrows from the respective shell.

The method of tilting the projectile above the target in order to increase the splinter impact on sensitive targets such as vehicle roofs and pickets protected at the side by, for example, sandbags, walls, bunkers (see fig. 3a-c) can also be applied to other projectiles, flying bombs or fin-stabilized shells which are used against other targets.

## Claims

1. A projectile (100) comprising a front nose portion (N), a casing portion (M) comprising an active charge (1) disposed between the nose portion (N) and a rear portion comprising a fin portion (9), the nose portion (N) further comprising: a sensor (4), a first initiation device (6) and associated at least one impulse motor (3), which are initiated by the sensor (4) in order to tilt the projectile (100), a nozzle (7), a control computer (8), and also a second initiation device (2) adjacent to and for initiating the active charge (1) disposed in the casing (M), **characterized in that** the projectile (100) also comprises at least one gyro (5) for initiating the second initiation device (2) and the active charge part (1) over a target.

2. The projectile (100) as claimed in claim 1, in which said at least one impulse motor (3) is driven by a powder charge.

3. The projectile according to any one of claims 1 to 2, in which the sensor (4) is a height sensor.

4. The projectile as claimed in any one of claims 1 to 3, in which the impulse motor (3) is pyrotechnical.

5. The projectile as claimed in any one of claims 1 to 4, in which the active charge (1) comprises balls.

6. The projectile as claimed in any one of claims 1 to 5, in which the active charge (1) is disposed on one side of the casing portion (M) of the projectile, preferably on the same side of the projectile as that on which the at least one nozzle (7) is arranged in the nose portion (N).

7. The projectile (100) as claimed in any one of claims 1 to 6, in which the active charge (1) is configured as a projectile-forming, directional explosive action.

8. The projectile (100) as claimed in any one of claims 1 to 7, in which the active charge (1) is prefragmented with balls, cubes, hexagons or disks made of heavy metal or steel.

9. A method for choosing the angle of attack of a projectile (100) defined according to any one of claims 1 to 8 over a target, said method comprising:
- setting the first angle signal of a gyro (5) to 0° at a predetermined distance to the target, and a second angle signal to the desired change of angle over the target,
- measuring the distance to the target with a height sensor (4),
- starting a chosen impulse motor (3) at a defined height, wherein the projectile (100) rotates horizontally in relation to its path, and
- initiating the active charge (1) when the gyro (5) signals the second, predetermined angle.

10. The method as claimed in claim 9, wherein the second angle relative to the first angle is selectable.

11. The method as claimed in claim 10, wherein the active charge (1) is initiated when the gyro (5) signals a second angle relative to the first angle of around 90°.

## Patentansprüche

1. Ein Projektil (100) mit einem vorderen Spitzenabschnitt (N), einem Hülsenabschnitt (M) mit einer Treibladung (1), die zwischen dem Spitzenabschnitt (N) und einem hinteren Abschnitt mit einem Rippenabschnitt (9) angeordnet ist, wobei der Spitzenabschnitt (N) außerdem:
einem Sensor (4), einer ersten Zündvorrichtung (6) und mindestens einem zugeordneten Schubmotor (3), der durch den Sensor (4) ausgelöst wird, um das Projektil (100) zu neigen, einer Düse (7), einem Steuerungs-Computer (8), sowie eine zweite Zündvorrichtung (2), die an die im Gehäuse (M) angeordnete Treibladung (1) angrenzt und diese zündet, **dadurch gekennzeichnet, daß** das Projektil (100) außerdem mindestens einen Kreisel (5) zur Zündung der zweiten Zündvorrichtung (2) und der Treibladung (1) über einem Ziel aufweist.

2. Das Projektil (100) nach Anspruch 1, wobei mindestens ein Schubmotor (3) durch eine Pulverladung ausgelöst wird.

3. Das Projektil (100) nach Anspruch 1 oder 2, wobei der Sensor (4) ein Höhen-Sensor ist.

4. Das Projektil (100) nach einem der Ansprüche 1 bis 3, wobei der Schubmotor (3) pyrotechnisch ist.

5. Das Projektil (100) nach einem der Ansprüche 1 bis 4, bei dem die Treibladung (1) aus Kugeln besteht.

6. Das Projektil (100) nach einem der Ansprüche 1 bis 5, bei dem die Treibladung (1) auf einer Seite des Gehäuseteils (M) des Projektils angeordnet ist, vorzugsweise auf derselben Projektilseite wie die, auf der die mindestens eine Düse (7) im Spitzenabschnitt (N) angeordnet ist.

7. Das Projektil (100) nach einem der Ansprüche 1 bis 6, bei dem die Treibladung (1) als eine projektilbildende, gezielte Sprengwirkung konfiguriert ist.

8. Das Projektil (100) nach einem der Ansprüche 1 bis 7, bei der Treibladung (1) mit Kugeln, Würfeln, Sechskanten oder Scheiben aus Schwermetall oder Stahl vorfragmentiert ist.

9. Ein Verfahren, zum Auswählen des Anstellwinkels eines Projektils (100), nach einem der Ansprüche 1 bis 8, das über einem Ziel definiert ist, wobei das Verfahren umfaßt, daß;
einstellen des ersten Winkelsignals eines Kreisels (5) auf 0° bei einem vorbestimmten Abstand zum Ziel und eines zweiten Winkelsignals auf die gewünschte Winkeländerung über dem Ziel,
Messung der Entfernung zum Ziel mit einem Höhensensor (4),
Starten eines ausgewählten Schubmotor (3) in einer definierten Höhe, wobei sich das Projektil (100) horizontal in Bezug auf seine Laufbahn dreht, und
Auslösung der Treibladung (1), vorausgesetzt, daß der Kreisel (5) den zweiten, vorbestimmten Winkel signalisiert.

10. Ein Verfahren nach Anspruch 9, wobei der zweite Winkel in Bezug auf den ersten Winkel auswählbar ist.

11. Ein Verfahren nach Anspruch 10, bei dem die Treibladung (1) initiiert wird, wenn der Kreisel (5) einen zweiten Winkel relativ zum ersten Winkel von etwa 90° signalisiert.

## Revendications

1. Un projectile (100) comprenant une partie nez avant (N), une partie boîtier (M) comprenant une charge active (1) disposée entre la partie nez (N) et une partie arrière comprenant une partie ailette (9), la partie nez (N) comprenant en outre :
un capteur (4), un premier dispositif d'amorçage (6) et au moins un moteur à impulsion associé (3), qui sont amorcés par le capteur (4) afin de faire basculer le projectile (100), une buse (7), un ordinateur pilote (8), ainsi qu'un deuxième dispositif d'amorçage (2) adjacent à la charge active et pour amorcer celle-ci (1) disposée dans le boîtier (M), **caractérisé en ce que** le projectile (100) comporte également au moins un gyroscope (5) pour l'amorçage du deuxième dispositif d'amorçage (2) et de la charge active (1) sur une cible.

2. Le projectile (100) selon la revendication 1, en ce que au moins un moteur à impulsion (3) est entraîné par une charge de poudre.

3. Le projectile (100) selon l'une des revendications 1 à 2, en ce que le capteur (4) est un capteur de niveau.

4. Le projectile (100) selon l'une des revendications 1 à 3, en ce que le moteur à impulsion (3) est pyrotechnique.

5. Le projectile (100) selon l'une des revendications 1 à 4, en ce que la charge active (1) comprend des balles.

6. Le projectile (100) selon l'une des revendications 1 à 5, en ce que la charge active (1) est disposée sur un côté de la partie (M) du boîtier du projectile, de préférence sur le côté du projectile où la ou les buses (7) sont disposées dans la partie nez (N).

7. Le projectile (100) selon l'une des revendications 1 à 6, en ce que la charge active (1) est configurée comme une action explosive directionnelle formant un projectile.

8. Le projectile (100) selon l'une des revendications 1 à 7, en ce que la charge active (1) est pré-fragmentée par des billes, des cubes, des hexagones ou des disques en métal lourd ou en acier.

9. Une méthode pour choisir l'angle d'attaque d'un projectile (100) défini selon l'une quelconque des revendications 1 à 8 par rapport à une cible, ladite méthode comprenant :
le réglage du premier signal angulaire d'un gyroscope (5) à 0° à une distance prédéterminée de la cible et un deuxième signal d'angle pour le changement d'angle souhaité sur la cible,
la mesure de la distance à la cible à l'aide d'un capteur de niveau (4),
le démarrage d'un moteur à impulsion choisi (3) à une hauteur définie, dans lequel le projectile (100) tourne horizontalement par rapport à sa trajectoire et
l'amorçage de la charge active (1) lorsque le gyroscope (5) signale le second, angle prédéterminé.

10. La méthode selon la revendication 9, en ce que le deuxième angle est sélectionnable par rapport au premier.

11. La méthode selon la revendication 10, dans laquelle la charge active (1) est amorcée lorsque le gyroscope (5) signale un deuxième angle par rapport au premier angle d'environ 90°.
